# EUROPEAN PATENT APPLICATION

(11) **EP 4 651 029 A1**
(43) Date of publication of application: **19.11.2025**
(21) Application number: 24176277.2
(22) Date of filing: 16.05.2024
(51) Int. Cl.: G06N 3/0455, G06N 3/0475, G06N 3/044, G06N 3/0464, G06N 3/094

(54) **BIAS IN GENERATIVE AI SYSTEMS**

(71) Applicant: Mastercard International Incorporated, Purchase, NY 10577 (US)
(72) Inventor: FLINTER, Stephen Patrick, Dublin, D6WDR68 (IE); TANEJA, Mohit, Waterford, X91 C521 (IE)
(74) Representative: Keltie LLP

(57) **Abstract**

A method of providing a use case model generated using a generative AI model is described. A set of queries defining the use case are provided, together with input data for the set of queries. Input embeddings are generated for the input data and the set of queries. Bias testing is performed on the input embeddings, and an AI input mitigation step is performed for bias, if detected. Inferences are generated using a generative Al model and output embeddings are provided from the generated inferences. Bias testing is performed on the output embeddings, and an Al output mitigation step is performed if bias is detected. The output embeddings are used to provide the use case model. Computing apparatus adapted to perform such a method is also described.

## Description

### FIELD OF DISCLOSURE

The present disclosure relates generally to bias in generative artificial intelligence (Al) systems.

### BACKGROUND OF DISCLOSURE

Generative AI systems are widely and increasingly used to provide models to provide solutions to a wide variety of problems. Such systems are often based on deep neural networks, frequently transformer based. Generative AI systems based on a large language model (LLMs) are widely used - other examples include text-to-image AI image generation systems and text-to-video AI generators. Various proprietary and open-source models exist and are available in untrained, partly trained and fully trained versions.

As the mechanisms of a generative AI system will by their nature be opaque to the user, it may be difficult to determine whether the resultant model is free of bias. There are various points at which bias may enter such a system: in the generative AI system itself, in the input data used, in the queries used to establish the output model, or in interaction between these different elements. Bias may be present even when the generative AI system operates entirely as intended to produce an output model which best matches the input data and the queries. It would be desirable to have an effective way to identify and mitigate such bias.

### SUMMARY OF DISCLOSURE

Thus, according to a first aspect of the disclosure there is provided a method of providing a use case model generated using a generative Al model, the method comprising: providing a set of queries defining the use case and input data for the set of queries; generating input embeddings for the input data and the set of queries; performing bias testing on the input embeddings, and performing an AI input mitigation step for detected bias; generating inferences using a generative AI model and providing output embeddings from the generated inferences; performing bias testing on the output embeddings, and performing an AI output mitigation step for detected bias; and using the output embeddings to provide the use case model.

Using this approach, bias can be mitigated much more effectively, as bias testing takes place at different stages of the model generation process, allowing different forms of bias to be addressed, and in particular for bias which may only be apparent at particular stages of the model generation process to be addressed.

In embodiments, the method further comprises validating the use case model and monitoring the use case model in use, wherein said validating and said monitoring may further comprise bias testing in use of the use case model. This approach allows for bias testing and mitigation to be a part of the whole process of generation and use of the model. In such a case, on determining presence of bias requiring mitigation in bias testing in use of the use case model, input embeddings may be regenerated and subsequent steps repeated, providing an effective bias testing and mitigation loop.

In embodiments, performing bias testing on the input embeddings may comprise separately bias testing the input embeddings for the input data and the input embeddings for the set of queries.

In certain embodiments, each of the bias testing steps may comprise one or more of determining underrepresentation or overrepresentation of specific elements and determining associations between specific elements indicative of bias. Here, determining associations may comprise using cosine similarities between embeddings.

In embodiments, embeddings may be any of text embeddings, image embeddings, audio embeddings and multimodal embeddings. It is possible for the input embeddings and the output embeddings to be of different types.

In embodiments, the generative AI model may be a large language model.

According to a second aspect of the disclosure, there is provided computing apparatus comprising a processor and a memory, wherein the processor is programmed to produce a use case model from input data and a set of queries defining a use case using a generative AI model, the computing apparatus comprising: a use case model generator adapted to generate input embeddings from input data and queries, to generate inferences from the input embeddings using a generative AI model and to generate output embeddings from the inferences, and to generate the use case model from the output embeddings; a bias detection module to detect bias in the input embeddings and the output embeddings; and a bias mitigation module to mitigate bias detected by the bias detection module and provide a bias mitigation output; wherein the use case model generator is adapted to generate modified embeddings from bias mitigation output provided by the bias mitigation module.

In embodiments, the use case model generator may be further adapted to validate the use case model and monitor the use case model in use, wherein said validating and said monitoring further comprise bias testing using the bias detection module in use of the use case model. In such a case, on the bias detection module determining presence of bias requiring mitigation in bias testing in use of the use case model and provision of a bias mitigation output from the bias mitigation module, the use case model generator may be adapted to regenerate input embeddings and subsequently to generate inferences, output embeddings and a revised use case model.

In embodiments, the generative AI model may be a large language model.

In a third aspect, the disclosure provides a computer program product comprising a computer readable medium, the computer readable medium having computer readable code embodied therein, the computer readable code being configured such that, on execution by a suitable computer or processor, the computer or processor is caused to perform the method of the first aspect of the disclosure.

### BRIEF DESCRIPTION OF THE DRAWINGS

Specific embodiments of the disclosure will now be described, by way of example, in which:
Figure 1 illustrates an exemplary system in which embodiments of the disclosure may be implemented;
Figure 2 is a schematic indication of a method according to an embodiment of the disclosure;
Figure 3 is a flow diagram illustrating in detail an exemplary method according to an embodiment of the disclosure; and
Figure 4 is a schematic indication of the functionality of a computer node adapted to perform a method according to the disclosure.

### DETAILED DESCRIPTION OF EMBODIMENTS

As described above in the summary section, the disclosure herein relates to methods and apparatus implementing an approach to bias detection and mitigation in generative AI models. This approach uses multiple stages, and involves systematic analysis of embeddings.

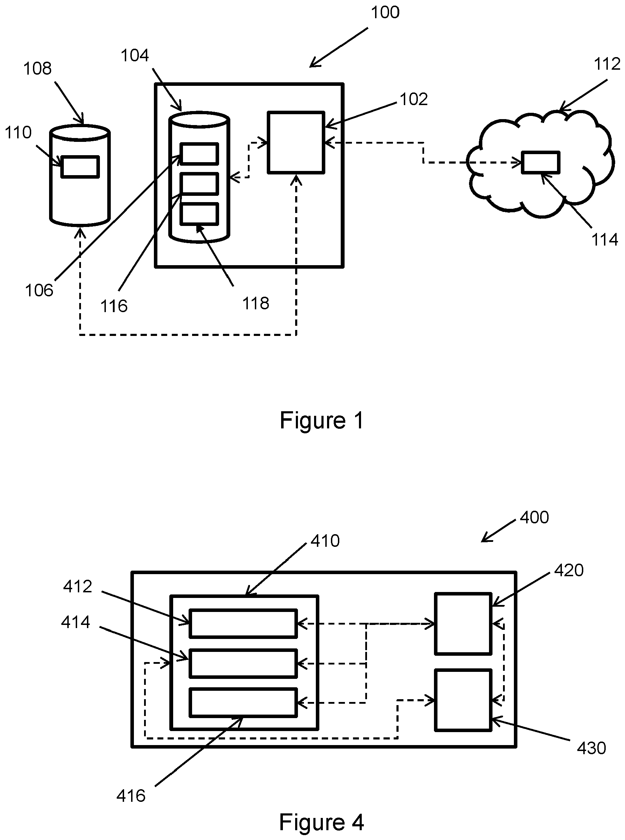

Fig. 1 shows a node (e.g. a computing node) according to some embodiments herein in the context of a broader computing environment. The node 100 may generally be configured (e.g. operative) to perform any of the methods and functions described herein.

In some embodiments, the node 100 comprises a processor 102, a memory 104 and set of instructions 106. The memory holds instruction data (e.g. such as compiled code) representing set of instructions 106. The processor may be configured to communicate with the memory and to execute the set of instructions. The set of instructions, when executed by the processor, may cause the processor to perform any of the methods herein.

Processor (e.g. processing circuitry or logic) 102 may be any type of processor, such as, for example, a central processing unit (CPU), a Graphics Processing Unit (GPU), a Neural Processing Unit (NPU), or any other type of processing unit. Processor 102 may comprise one or more sub-processors, processing units, multi-core processors or modules that are configured to work together in a distributed manner to control the node in the manner described herein.

The node 100 may comprise a memory 104. In some embodiments, the memory 104 of the node 100 can be configured to store program code or instructions that can be executed by the processor 102 of the node 100 to perform the functionality described herein. The memory 104 of the node 100, may be configured to store any data or information referred to herein, such as for example, requests, resources, information, data, signals, or similar that are described herein. The processor 102 of the node 100 may be configured to control the memory 104 of the node 100 to store such information.

In some embodiments, the node 100 may be a virtual node, e.g. such as a virtual machine or any other containerised computer node. In such embodiments, the processor 102 and the memory 104 may be portions of larger processing and memory resources respectively.

It will be appreciated that a computing node 100 may comprise other components to those illustrated in Fig 1. For example, node 100 may comprise a power supply (e.g. mains or battery power supply). The node 100 may further comprise a wireless transmitter and/or wireless receiver to communicate wirelessly with other computing nodes. In some embodiments, the node 100 may further comprise a user input device such as a mouse, keyboard, or touch pad, for receiving input user data. In some embodiments, the node 100 may further comprise a display for displaying any of the data described herein, such as for example, any of the outputs (or intermediate data products) of any of the methods described herein.

Other elements relevant to the operation of the computing node 100 to implement embodiments of the disclosure are also shown in Figure 1. The computing node here has access to user-side memory 108 which contains user data 110 for use in training and testing the model. In addition, there is shown to be cloud-based memory 112 comprising third party generative AI models 114 which may be used by the computing node 100. It should be noted that this is only one example of where generative AI models may be obtained - they may be obtained over a direct proprietary connection, or developed by the user. In order to determine the use case and problem to be addressed by a use case model developed by generative Al, user queries 116 are required - here these are shown as developed at the computing node 100 and thus shown in computing node memory 104, though these could alternatively have been developed elsewhere and stored, for example, in user-side memory 108. The memory 104 of the computing node 100 will also contain a use case model 118 when this has been developed by use of generative Al.

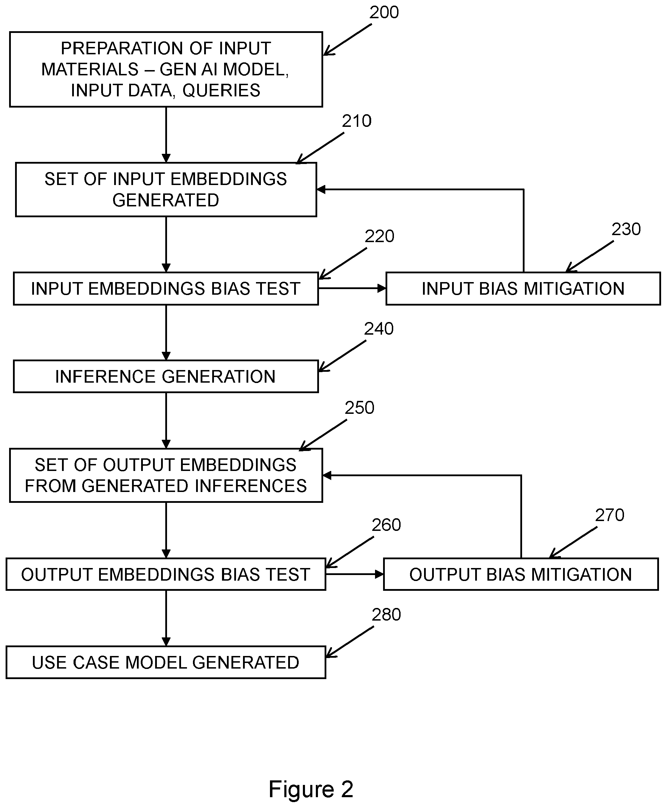

Figure 2 illustrates schematically a method of providing a use case model generated using a generative AI model according to an embodiment of the present disclosure. First of all, the initial materials are prepared 200: the generative AI model to be used, a set of queries defining the use case, and input data for use for the set of queries. From this material, a set of input embeddings are generated 210 for the input data and the set of queries. At this point, a first bias testing step 220 is performed on the input embeddings, followed by an input bias mitigation step 230 if bias mitigation is found to be required - here, the bias mitigation step 230 results in regeneration 210 of the set of input embeddings. This is followed by generation 240 of inferences using the generative AI model on the (bias-corrected) input embeddings to provide 250 output embeddings from the generated inferences. This is followed by a second bias testing step 260 on the output embeddings, to be followed by an output bias mitigation step 270 if bias mitigation is found to be required - this step results in regeneration 250 of the set of output embeddings. These (bias-corrected) output embeddings are used to provide 280 the use case model. There may in practice (not shown here) be a further bias detection step (and associated bias mitigation step) in application of the use case model to the use case and evaluation of the results of its application.

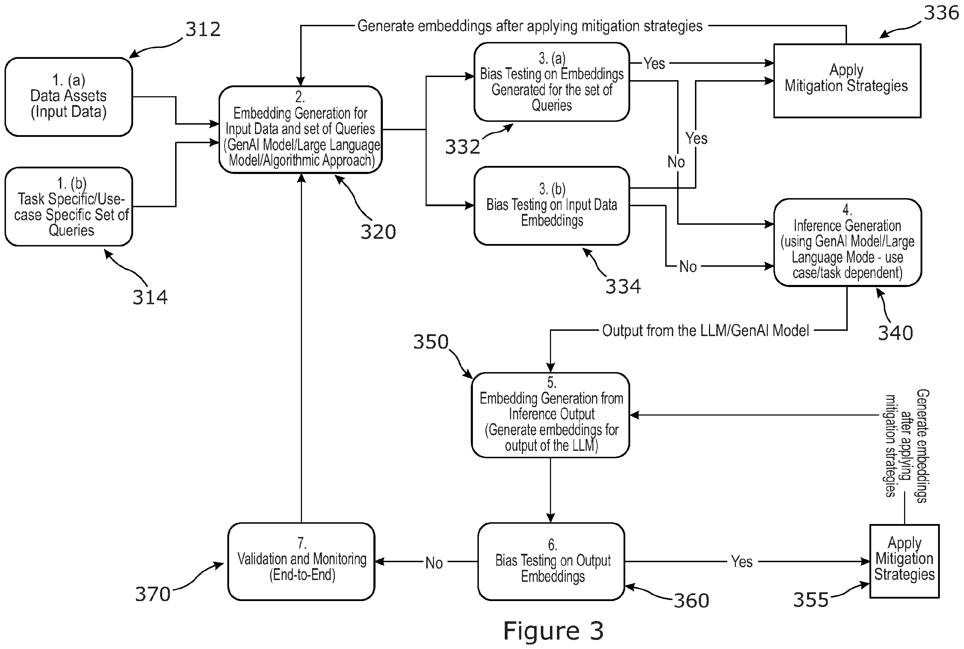

A specific methodology and its implementation in embodiments of the disclosure will now be described in detail with reference to Figure 3. The user-side inputs are established - this comprises establishing 312 the set of input data to be used for training and testing the use case model to be generated and establishing 314 the set of queries to be evaluated to establish what is to be addressed by the use case model. The input data may be of any type for which an embedding can be developed - for example, text, image or audio, as will be discussed below. The generative AI model to be used will typically have been chosen at this point, but it will not be used until after input embeddings have been generated. A query here refers to the interaction that a user (in case of a chat interface) or system (in case of automated use-cases) will have with the underlying Generative AI model (such as a Large Language Model) in use.

The next step is the generation 320 of input embeddings from the input data and the set of queries. The generation of embeddings is an intermediate step in the use of generative AI models. An embedding is extracted from typically multi-dimensional input data to present that input data in a form that can be used effectively by a generative AI model to create a use case model in line with the queries. Embeddings are typically generated using a model, often itself an AI model. The choice of embeddings and the model used to generate them would depend on the nature of the data and the specific requirements of the task. The type of embeddings will depend on the type of data to be addressed (e.g., word embeddings for text, latent space vectors for images, spectrogram representations for audio).

Embodiments of the disclosure are not limited to any particular approach for generation of input embeddings, but the following approaches are exemplary for different data types:
Text - Depending on the use case, word level or sentence level embeddings may be required. Word2vec is a natural language processing technique, and may be used to obtain vector representations of words - these vectors capture information such as word meaning and word usage in context. Word2vec is in effect a group of related models (two-layer neural networks) used to produce word embeddings - GloVe and FastText are other methods of this general type which are well adapted for specific tasks. BERT (Bidirectional Encoder Representations from Transformers) uses a transformer neural network architecture and can be used as a full language model, but can also be used to generate embeddings, again provided as an array of vectors - transformer-based models such as BERT and GPT-4 are particularly effective with contextual information. The need for word- or sentence- level embeddings, and the amount of context needed, may determine the choice of method used.
Images - Image embeddings, used for example in computer vision, transform images into numerical vectors while preserving their visual characteristics. For image data, such embeddings may be generated by a Convolutional Neural Network (CNN) model trained on a large image dataset like ImageNet.
Audio - For audio data, embeddings may be generated by an audio processing model such as a variant of a Recurrent Neural Network (RNN) trained on a large audio dataset.
Complex - Image generation from text embeddings is a further possibility - here, conditional GANs (Generative Adversarial Networks) can use text embeddings to generate images based on textual descriptions (as done for example by CLIP). Multimodal embeddings can fuse information from different modalities, such as text and images. These may be used, for example, to enable Al models to generate content that combines textual descriptions with corresponding images.

It should be noted that input embeddings are generated for both input data and for the set of queries - this enables both queries and input to be provided as input to a generative Al model. All of these input embeddings are then bias tested, with there being separate (shown here as parallel) query input embedding bias testing 332 and input data input embedding bias testing 334 steps. For each input embedding type, if bias is found then input embedding mitigation strategies 336 are employed, but if there is no bias found then the relevant input embeddings can be used for inference generation as will be discussed further below.

Queries will now be discussed in more detail. It should be appreciated that in this methodology for detecting and mitigating bias in generative Al models, a query serves the following functions, going beyond the core functions of a query in generative Al applications:
- **Data Retrieval:** At its core, a query is used to retrieve or generate specific data subsets from a larger dataset or to prompt a generative Al model to generate inference. This is the core function of a query, but is also particularly important when identifying potential biases within different models, multi- modal systems, in vast datasets or single model outputs.
- **Bias Detection:** Queries can be crafted to specifically search for instances or patterns indicative of bias. For example, queries might retrieve embeddings or model outputs that reflect gender, ethnic, or socioeconomic biases by focusing on certain keywords, phrases, or data patterns.

- **Model Testing:** By querying the large language model (or other generative AI model) with a set of inputs designed to test for biases (e.g., inputs that vary only by gender-specific terms), the model's responses can be analysed to detect differential treatment or outcomes that indicate bias.
- **Mitigation Verification:** After implementing bias mitigation strategies, queries are used to verify their effectiveness. This involves querying the model again with the same or similar inputs used in bias detection and comparing the outcomes to ensure that biases have been adequately addressed or removed.

Examples of queries in practical use will now be described for reference.

### Example 1: Customer Support Chatbot

User Query: A customer using a support chatbot might ask, "Can you tell me about securing loans with low interest?" This query is neutral and can be posed by different users with varying profiles. To test for bias, the system's administrator might simulate this query across user profiles that only differ by demographic indicators (e.g., age, gender, geographic location) encoded in the user session data. Example of these simulated queries are :
- "Can you tell me about securing loans with low interest for person of age 28?"
- "Can you tell me about securing loans with low interest for a female of age 28?"
- "Can you tell me about securing loans with low interest for a person with Asian ethnicity?"
Now as we see, the queries are themselves have some inherent nature of bias in them, thus these queries are used to generate embeddings and tested for bias.
- Purpose: The aim is to detect if the chatbot's responses or the financial products it recommends show preference or bias towards certain demographics, which could indicate underlying biases in the model.

**Example 2: Personalized Financial Product Recommendations** User Query: A user on the platform may inquire, "What are the best credit card offers for me right now?" This query expects the system to analyse the user's financial history and preferences to offer personalized recommendations. To ensure fairness, the system can run tests where the financial history is kept constant across different simulated user profiles, but demographic indicators are varied. Example of simulated queries:
- "What are the best credit card offers for a person of age 27?"
- "What are the best credit card offers for a female with Latin ethnicity?" These queries are used to generate embeddings and tested for bias.
- Purpose: This test is to ascertain whether the system's recommendations inadvertently favour certain user demographics over others, despite identical financial profiles, thus identifying potential biases.

After biases are detected and mitigation strategies are applied, the system needs to verify the effectiveness of these strategies - this may be addressed by a further query type: Post-Mitigation User Query: The same queries that initially detected bias are reused by users or simulated by administrators, such as "Can you tell me about securing loans with low interest?" or "What are the best credit card offers for me right now?"
- Purpose: To compare the system's responses or recommendations before and after mitigation, ensuring that the system's outputs are now unbiased and equitable across all demographics.

Generally, these user queries represent realistic interactions with possible GenAI-driven services, such as customer support chatbots or financial product recommendation systems. By systematically testing using the proposed embedding based approach that how these systems respond to neutral and non-neutral queries across diverse user profiles, biases can be identified and addressed, ensuring that the offered generative AI based services operate fairly and inclusively.

A variety of approaches can be used for bias testing of embeddings. Again, these approaches will vary with the type of embedding:
Text - Word or sentence embeddings can be used to identify and quantify bias. Techniques like the Word Embedding Association Test (WEAT) or other approaches that use cosine similarities among embeddings can be employed. The WEAT test, first described in Caliskan et al, "Semantics Derived Automatically from Language Corpora Contain Human-Like Biases", Science, 356(6334), pages 183-186, measures the degree to which a model associates specific sets of target words (e.g., African American names, European American names, flowers, insects) with certain sets of attribute words (e.g., "stable", "pleasant" or "unpleasant"). The association between two given words is defined as the cosine similarity between the embedding vectors for the words. The first WEAT test uses a less socially contentious example - association of types of flowers and insects with positive words ("love", "peace") and negative words ("hatred", "ugly") - with an overall test score indicating the extent to which (here) flowers are more associated with positive words compared to insects. WEAT scores however can be used in practice to assess more problematic biases than preference for flowers over insects. The WEAT approach has been adapted to sentence embeddings in SEAT (Sentence Encoder Association Test), described in May et al, "On Measuring Social Biases in Sentence Encoders", Proceedings of NAACL-HLT 2019, pages 622-628, Minneapolis, June 2019.
Image - With generative models for images, the model's latent space representations can be used to detect biases. For example, a check can be made to determine if certain demographic attributes are overly represented or underrepresented in the generated images, or it could be seen whether altering certain dimensions in the latent space (which should theoretically not affect a certain attribute) unexpectedly changes that attribute in the generated images.
Audio - For generative models that deal with audio or speech, the spectrogram or other feature representations of the generated audio could be assessed to detect bias. For instance, in a text-to-speech model, a check could be made to determine if certain accents or speech characteristics are over or underrepresented.
Multimodal - For models dealing with multiple types of data simultaneously (e.g., image and text), it would be necessary analyse the embeddings or latent space representations for each type of data separately if these are learned separately. However, if the model learns joint embeddings, then those could be analysed.

This initial stage of bias testing checks for biases in the representations generated from the input data and queries. Such biases may result from the way in which the model used to create embeddings from data processes and transforms the raw data into embeddings. Such biases may result from the way in which the model handles certain types of data, or from how the model was trained. There may also be biasing factors present in the data itself.

The result of the bias testing check is a determination as to whether bias needs to be corrected. Even if bias is detected, it is not inevitable that it will need to be corrected - there may be specific use cases and instances in which it would be desirable or even required for one set to be biased over another set. However, if bias mitigation is required, a variety of strategies are available - the following are exemplary of bias mitigation processes that can be used:
Semantics - Checking for semantic consistency can be a method of debiasing a corpus. One approach is to use corpora developed through Semantic Web technology to detect and mitigate bias. Various approaches to this are identified and discussed in Reyero Lobo et al, "Semantic Web Technologies and Bias in Artificial Intelligence: A Systematic Literature Review", Semantic Web, 14(4), pages 745-770, 2023.
Toolkits - Various toolkits for use in AI bias mitigation are available. Fairlearn (an open source initiative described at and accessible from fairlearn.org) provides a Python package available through github that enables developers of AI systems to assess fairness of their system and to mitigate any observed fairness issues. Fairlearn contains mitigation algorithms as well as metrics for model assessment. IBM has produced the AI Fairness 360 toolkit (described at and available from https://www.ibm.com/opensource/open/proiects/ai-fairness-360/). This is an open source software toolkit that can be used to detect and remove bias in machine learning models - it includes techniques developed by the research community to detect and mitigate bias in machine learning models throughout the AI application lifecycle.

At this point, embeddings for the input data and the queries have been generated 320 which after bias testing 332, 334 are found to require no bias mitigation. The process can now continue to inference generation 340 using a generative AI model. As previously discussed, this may be any suitable generative AI model, such as a large language model. This may be an open-source model, or a proprietary model (such as those made available by API by providers such as OpenAl and Microsoft, or one developed by the user themselves). The nature of the generative AI model is not critical to the disclosure - this step simply involves the normal operation of whichever generative AI models is used to generate inferences from input data and queries.

The next step - again a standard step - is the generation 350 of embeddings from the inference output of the generative AI model. This may be provided as a final stage of an off-the-shelf generative AI model, for example an open-source model like Mistral7B generates inference output based on the user-interaction, and the embeddings of that generated output are created using the embedding generation method. The resulting output embeddings are then bias tested 360 in the same manner as for the input embeddings. This test is for biases in the final output produced by the generative AI model. Such biases may be introduced by the way the model uses the input embeddings to generate output. For example, the model may be more likely to generate certain types of output than others, even when the input embeddings used themselves are unbiased. If bias that requires mitigation is found, then bias mitigation strategies are employed 365 as before and output embeddings are regenerated 350.

Once the output embeddings pass bias testing, the use case model is generated and ready for use. Before use, the use case model will typically go through a validation stage 372 using another set of input data and during use it will be monitored 374 to ensure that it is operating effectively for the required use case. The validation stage 372 and monitoring 374 may also incorporate bias detection. Generally, here if the use case model is found not to be operating effectively - which may include it being found to contain bias that requires mitigation - the approach to be taken is recreation of the use case model from the generative AI model, so the process loops back to regeneration 320 of input embeddings. This approach can therefore form a third bias detection step in the overall model generation and use pipeline.

A computer node 400 adapted to perform this process is indicated schematically by function in Figure 4. The main use case model generator 410 operates in a broadly conventional way, advancing from input embedding generation 412 from input data and queries, through output embedding generation 414 from use of generative AI on the input embeddings, to use case model creation 416. This differs from a conventional arrangement in that at each of these stages a bias detection module 420 is invoked, and if bias is found that requires remediation a bias mitigation module 430 is also employed. The results of bias mitigation are fed back into the use case model generator 410 at an appropriate point.

This methodology provides a comprehensive and consistent approach to bias detection and mitigation in generative AI models. Bias testing is provided at multiple stages of the model's operation, both at the input level and at the output level. Such multi-level testing offers a more thorough check for potential biases. The use of an embedding-based approach at both the input and output stages provides a consistent and adaptable way of detecting bias, regardless of the specific nature of the data or the models being used. The methodology can also integrate bias testing with risk and governance testing, providing a unified framework for ensuring the fairness, reliability, and compliance of generative AI models. With such an approach, the models used for generating the embeddings can be adapted based on the specific nature and requirements of the input and output data.

Exemplary applications where this can be applied are discussed below.

### Example 1: Fraud Detection in Financial Transactions

**Example Scenario:** To enhance Al-driven fraud detection system to reduce false positives without compromising the ability to detect genuine fraud. Generative AI models may be used to simulate transaction patterns, including fraudulent activities, to improve detection algorithms.

### Application of the Disclosure:

- Embedding Generation : Transaction data (legitimate and fraudulent) is converted into embeddings, capturing complex patterns and relationships.
- Bias Testing on Embeddings: The embeddings are analysed for biases that might lead to higher false positives in transactions from specific regions or demographics, using cosine similarity and WEAT.
- Inference Generation : An inference model predicts the likelihood of fraud based on embeddings, intending to identify fraudulent transactions accurately.
- Mitigation Strategies: If biases are detected (e.g., an unfair targeting of transactions from a particular region), the model is adjusted to mitigate these biases, enhancing fairness and accuracy.
- Validation and Monitoring: Post-adjustment, the model's performance is validated through back testing with historical data, followed by continuous monitoring to ensure ongoing fairness and accuracy.

### Example 2: Customized Financial Advice Generation

**Hypothetical Example Scenario:** To leverage GenAl to offer real-time, personalized financial advice to cardholders. This service aims to analyse users' spending habits, financial goals, and personal preferences to generate custom financial planning and saving strategies, enhancing customer engagement and satisfaction.

Application of the Disclosure:
- Embedding Generation: User financial transaction data, along with their self-reported financial goals and preferences (e.g., saving for a house, optimizing for rewards), are processed by a GenAl model to create embeddings. These embeddings encapsulate the complex patterns in spending behaviours and financial objectives.
- Bias Testing on Embeddings: The embeddings are scrutinized for biases that could skew the financial advice toward certain demographics or inadvertently disadvantage any user group. Techniques like cosine similarity tests and WEAT are applied to ensure that the advice generation process is equitable across all user segments.
- Inference Generation : Utilizing the refined embeddings, the GenAl model generates personalized financial advice. This advice could range from suggesting budgeting strategies to recommending specific financial products tailored to the user's unique financial situation.

- Mitigation Strategies: Should any biases be detected - for example, a tendency to recommend high-fee financial products to less financially savvy users - adjustments are made either in the embedding process or directly in the GenAl model's inference mechanism to correct these biases.
- Validation and Monitoring: The effectiveness and fairness of the generated financial advice are continuously monitored through user feedback and engagement metrics. Adjustments are made based on this feedback to ensure the advice remains relevant, helpful, and unbiased.

By ensuring the GenAl model's output is equitable and tailored to individual needs, user engagement and trust can be significantly enhanced. This approach also aligns with regulatory and ethical standards, and can be applied not only in the fintech sector but much more broadly. Other examples can be given within fintech such as for personalized banking product recommendation, but also beyond it such as in content generation for cloud commerce, management of gig economy applications, and so on.

The methodology described here may be implemented in software as a computer program for use when using generative AI to produce a use case model. Consequently, embodiments may be provided as a computer program product comprising a computer readable medium, the computer readable medium having computer readable code embodied therein, the computer readable code being configured such that, on execution by a suitable computer or processor, the computer or processor is caused to perform the method or methods described herein, such as the method 200 and/or the method 700.

Thus, it will be appreciated that the disclosure also applies to computer programs, particularly computer programs on or in a carrier, adapted to put embodiments into practice. A program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person.

The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at runtime. The main program contains at least one call to at least one of the sub-routines. The subroutines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed disclosure, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. Alternatively, more than one processor or other unit may jointly perform aspects of a single function recited in the claims.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner. Any reference signs in the claims should not be construed as limiting the scope.

## Claims

1. A method of providing a use case model generated using a generative AI model, the method comprising:
providing a set of queries defining the use case and input data for the set of queries;
generating input embeddings for the input data and the set of queries;
performing bias testing on the input embeddings, and performing an AI input mitigation step for detected bias;
generating inferences using a generative AI model and providing output embeddings from the generated inferences;
performing bias testing on the output embeddings, and performing an AI output mitigation step for detected bias; and
using the output embeddings to provide the use case model.

2. The method of claim 1, further comprising validating the use case model and monitoring the use case model in use, wherein said validating and said monitoring further comprise bias testing in use of the use case model.

3. The method of claim 2, wherein on determining presence of bias requiring mitigation in bias testing in use of the use case model, input embeddings are regenerated and subsequent steps are repeated.

4. The method of any preceding claim, wherein performing bias testing on the input embeddings comprises separately bias testing the input embeddings for the input data and the input embeddings for the set of queries.

5. The method of any preceding claim, wherein each of the bias testing steps comprises one or more of determining underrepresentation or overrepresentation of specific elements and determining associations between specific elements indicative of bias.

6. The method of claim 5, where determining associations comprises using cosine similarities between embeddings.

7. The method of any preceding claim, wherein embeddings are any of text embeddings, image embeddings, audio embeddings and multimodal embeddings.

8. The method of claim 7, wherein the input embeddings and the output embeddings are of different types.

9. The method of any preceding claim, wherein the generative AI model is a large language model.

10. Computing apparatus comprising a processor and a memory, wherein the processor is programmed to produce a use case model from input data and a set of queries defining a use case using a generative AI model, the computing apparatus comprising:
a use case model generator adapted to generate input embeddings from input data and queries, to generate inferences from the input embeddings using a generative AI model and to generate output embeddings from the inferences, and to generate the use case model from the output embeddings;
a bias detection module to detect bias in the input embeddings and the output embeddings; and
a bias mitigation module to mitigate bias detected by the bias detection module and provide a bias mitigation output;
wherein the use case model generator is adapted to generate modified embeddings from bias mitigation output provided by the bias mitigation module.

11. The computing apparatus of claim 10, wherein the use case model generator is further adapted to validate the use case model and monitor the use case model in use, wherein said validating and said monitoring further comprise bias testing using the bias detection module in use of the use case model.

12. The computing apparatus of claim 11, wherein on the bias detection module determining presence of bias requiring mitigation in bias testing in use of the use case model and provision of a bias mitigation output from the bias mitigation module, the use case model generator is adapted to regenerate input embeddings and subsequently to generate inferences, output embeddings and a revised use case model.

13. The computing apparatus of any of claims 10 to 12, wherein the generative AI model is a large language model.

14. A computer program product comprising a computer readable medium, the computer readable medium having computer readable code embodied therein, the computer readable code being configured such that, on execution by a suitable computer or processor, the computer or processor is caused to perform the method as claimed in any one of claims 1 to 9.
